Europäisches Patentamt

European Patent Office

Office européen des brevets

(11) Numéro de publication: **0 365 398 B1**

## (12) FASCICULE DE BREVET EUROPEEN

(45) Date de publication de fascicule du brevet: **05.01.94**

(51) Int. Cl.5: **C08F 287/00**, C08L 101/00, //(C08L101/00,51:00)

(21) Numéro de dépôt: **89402809.1**

(22) Date de dépôt: **11.10.89**

(54) **Copolymères séquences et greffes, leur procédé de fabrication et utilisation de ces copolymères.**

(30) Priorité: **17.10.88 FR 8813648**

(43) Date de publication de la demande:
**25.04.90 Bulletin 90/17**

(45) Mention de la délivrance du brevet:
**05.01.94 Bulletin 94/01**

(84) Etats contractants désignés:
**AT BE CH DE ES FR GB GR IT LI LU NL SE**

(56) Documents cités:
**FR-A- 2 418 807
US-A- 3 459 700**

**DATABASE WPI (Derwent), résumé no.
68-21597q, Derwent Publications, Londres,
GB; & JP-A-68 028 786**

(73) Titulaire: **ELF ATOCHEM S.A.
4 & 8, Cours Michelet
La Défense 10
F-92800 Puteaux(FR)**

(72) Inventeur: **Krantz, Nicolas
4 rue du Berry
F-04600 Saint Auban(FR)**

**Description**

La présente invention concerne de nouveau copolymères séquencés et greffés : sur les polymères-troncs, plus simplement appelés troncs sont greffés des polymères appelés greffons.

Dans le brevet Japonais publié sous le numéro 63-41 558, on a décrit la synthèse d'une résine thermoplastique souple préparée par polymérisation en milieu aqueux d'un mélange monomère à base de chlorure de vinyle en présence de polyuréthane thermoplastique soluble dans le monomère.

Le brevet US 3,549,700 concerne des copolymères blocs non greffés. La demande de brevet japonais JP 033497 du 27 mai 1967 au nom de TOYO RAYON LTD décrit des copolymères blocs polyetheramides ayant des greffons hydrophiles tels que l'acide acrylique. Ces produits servent à améliorer l'absorption d'eau et l'antistatisme des textiles. Le brevet FR 2418807 décrit des copolymères blocs polyester polyether que l'on copolymérise avec des composés insaturés ayant des fonctions acide carboxyliques et des groupes OH.

Selon une variante les copolymères blocs polyether polyester sont greffés avec des produits insaturés ayant des fonctions amides ou époxy. Les polymères obtenus sont destinés à être vulcanisés.

L'invention a pour objet des copolymères séquencés et greffés dont les troncs sont constitués de motifs blocs polyesters ou blocs polyamide répartis de façon séquentielle, caractérisés (i) en ce qu'au moins une séquence du tronc est soluble dans la composition monomère dont sont issus les greffons et en ce qu'au moins une séquence dudit tronc est insoluble dans ladite composition monomère et (ii) en ce que les greffons contiennent du chlorure de vinyle, du chlorure de vinylidène, du chlorotrifluoroétylène, du (méth)acrylate de méthyle, d'éthyle, de butyle, d'éthyl-2hexyle, du styrène, de l'alphaméthylstyrène, de l'acétate de vinyle.

Parmi les mélanges préférés, on citera tout particulièrement ceux qui, outre du chlorure de vinyle, contiennent un (méth)acrylate d'alkyle (et éventuellement du chlorure de vinylidène), ou de l'acétate de vinyle ou du chlorotrifluoro-éthylène, ainsi que les mélanges à base de styrène et de (méth)acrylate d'alkyle.

Les polymères qui constituent les troncs des copolymères séquencés et greffés selon l'invention sont tels qu'au moins une séquence qui les constitue est soluble dans la composition monomère telle que définie précédemment et au moins une séquence est insoluble dans ladite composition monomère.

En général on classe ces copolymères blocs dans la famille des élastomères thermoplastiques (TPE) ; ils présentent une répartition séquentielle de motifs constitutifs de blocs rigides et de blocs souples. Parmi ces copolymères séquencés, on citera en particulier :

. Les copolymères blocs à base de polyétherester dont la phase rigide consiste en séquences polyester, constituées par exemple de polybutylène ou de polyéthylène téréphtalate, ces séquences étant copolymérisées avec des séquences souples constituées par exemple d'un glycol de bas poids moléculaire associé à un poly(alkylène éther) glycol.

. Les copolymères blocs à base de polyamide pour les séquences rigides et de séquences souples polyéther, que l'on appelle aussi polyétheramides.

Ces polyétheramides séquencés peuvent notamment résulter de la copolycondensation de séquences polyamide à extrémités réactives avec des séquences polyéther à extrémités réactives, telles que entre autres :

a) Séquences polyamide à bouts de chaînes dismines avec des séquences polyoxyalkylènes à bouts de chaînes dicarboxyliques.

b) Séquences polyamide à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatiques appelées polyétherdiols.

c) Séquences polyamide à bouts de chaînes dicarboxyliques avec des polyétherdiols, les polyétheramides obtenus étant, dans ce cas particulier, des polyétheresteramides, particulièrement préférés par la demanderesse.

De tels produits ont été décrits par exemple dans FR-A-2 273 021 et FR-A-2 401 947.

La masse moléculaire moyenne en nombre de ces séquences polyamide est généralement comprise entre 500 et 10 000 et plus particulièrement entre 600 et 5 000. Les séquences polyamide des polyétheresteramides sont formées de préférence de polyamide 6, 6.6, 6.12, 11 ou 12 ou de copolyamides résultant de la polycondensation de leurs monomères.

La masse moléculaire moyenne en nombre des polyéthers est comprise généralement entre 200 et 6 000 et plus particulièrement entre 600 et 3 000.

Les séquences polyéther consistent de préférence en polytétraméthylène glycol (PTMG), polypropylène glycol (PPG), ou polyéthylène glycol (PEG).

La viscosité inhérente des polyétheresteramides est avantageusement comprise entre 0,8 et 2,05.

La viscosité inhérente est mesurée dans le métacrésol à 20 °C avec une concentration initiale de 0,5 g pour 100 g de métacrésol.

Les polyétheresteramides selon l'invention peuvent être formés de 5 à 85 % en poids de polyéther, et de 95 à 15 % en poids de polyamide, et de préférence de 30 à 80 % en poids de polyéther et de 70 à 20 % en poids de polyamide.

L'invention concerne également le procédé de fabrication de ces copolymères séquencés et greffés. Ils sont préparés par greffage radicalaire d'une composition monomère telle que définie précédemment sur les chaînes macromoléculaires qui constituent les troncs et par polymérisation de ladite composition monomère afin de conduire aux polymères séquencés et greffés selon l'invention.

Non seulement ladite composition monomère vient se greffer radicalairement sur les troncs mais aussi elle se polymérise radicalairement de telle sorte que se forment des polymères greffés - ou greffons.

Par polymérisation radicalaire, on entend dans la présente description, une polymérisation en présence d'un initiateur de polymérisation, générateur de radicaux libres.

Les techniques de polymérisation habituellement utilisées conviennent pour la synthèse des copolymères séquencés et greffés selon l'invention.

On peut citer la polymérisation en masse et la polymérisation en suspension.

En général la température de polymérisation / greffage est comprise entre 30 et 100°C, et de préférence entre 35 et 80°C.

Les initiateurs de polymérisation sont en général des composés organosolubles. On peut les choisir parmi les initiateurs de polymérisation organosolubles habituellement utilisés dans la polymérisation en suspension, tels que des peroxydes organiques comme le peroxyde de lauroyle, le peroxyde de benzoyle, le peroxyde d'acétylcyclohexanesulfonyle, le peroxyde d'isobutyroyle, le peroxyde de dichloracétyle, le peroxyde de trichloracétyle ; des peroxydicarbonates comme le peroxydicarbonate d'éthyle, le peroxydicarbonate d'éthyle hexyle, le peroxydicarbonate d'isopropyle, le peroxydicarbonate d'isobutyle, le peroxydicarbonate de dicétyle ; le perméthoxyacétate de tertiobutyle ; le peréthoxyacétate de tertiobutyle ; le perphénoxy-2- propionate de tertiobutyle. On utilise généralement 0,001 à 0,10 %, en poids par rapport aux monomères mis en oeuvre, de l'initiateur ou des initiateurs exprimés en oxygène actif.

Dans le procédé de polymérisation en suspension, on met en oeuvre un mélange réactionnel comprenant de l'eau, les polymères-tronc, et une composition monomère tels que définis précédemment, éventuellement un agent de stabilisation et au moins un initiateur de polymérisation organosoluble tel que défini précédemment.

L'agent de stabilisation peut être choisi parmi ceux habituellement utilisés dans la polymérisation en suspension, tels que par exemple, l'alcool polyvinylique, les méthylcelluloses, les carboxycelluloses, les gélatines.

La quantité d'agent de stabilisation employée est en général comprise entre 0,05 et 1 % du poids de la composition monomère et des polymères-tronc introduits.

La quantité d'eau mise en oeuvre est choisie telle que la teneur initiale en composition monomère et en polymères-tronc est en général comprise entre 30 et 80 % du poids du mélange réactionnel total.

Les polymères-tronc sont introduits dans le mélange réactionnel sous forme de poudre (de granulométrie moyenne comprise en général entre 20 et 200 $\mu$m) ou sous forme de granulés (de granulométrie moyenne comprise en général entre 200 $\mu$m et 5 mm, et de préférence entre 500 $\mu$m et 4 mm).

Lorsque les polymères-tronc sont introduits sous forme de granulés au sein du mélange réactionnel, la présence d'agent de stabilisation en cours de polymérisation est facultative.

Par contre, après polymérisation, on peut ajouter des adjuvants de formulations tels que stabilisant thermique, lubrifiant, agent anti-oxydant, pigment... .

La composition monomère peut être introduite dans le mélange réactionnel eu une seule fois eu début de réaction mais peut aussi être introduite en continu pendant toute la durée de la polymérisation en suspension.

Une fois la polymérisation / greffage terminée, les copolymères séquencés et greffés peuvent être séparés du mélange réactionnel par tous procédés connus, tels que filtration, essorage, décantation centrifuge puis séchés et éventuellement tamisés ou broyés.

Dans le procédé de polymérisation en masse, le mélange réactionnel comprend les polymères-tronc, une composition monomère et au moins un initiateur de polymérisation radicalaire

On opère dans un réacteur dont l'agitation doit être suffisante pour assurer une bonne homogénéité de la réaction de polymérisation / greffage sur les granulés de polymères-tronc.

On peut mesurer le taux de greffage de la composition monomère sur les polymères-tronc par extraction sélective.

Pour mesurer, par exemple, le taux de greffage d'une composition monomère sur des polymères-tronc à base de polyétheresteramide, on procède tout d'abord à une extraction sélective des produits issus de la réaction de polymérisation / greffage telle que décrite ci-dessus dans l'isopropanol ou l'hexafluoroisopropanol.

Seul le polyétheresteramide (qui constitue les polymères-tronc) est soluble dans les alcools ; les copolymères séquencés et greffés ainsi que les polymères dérivant exclusivement de la composition monomère introduite sont insolubles. On peut ainsi déterminer la quantité de polymères-tronc à base de polyétheresteramide qui n'ont pas été greffés par la composition monomère.

Dans un deuxième temps et afin de déterminer la quantité de polymères qui dérivent exclusivement de la composition monomère, c'est-à-dire qui ne se sont pas greffés sur les polymères-tronc, on pratique la mise en solution des produits obtenus dans le tétrahydrofuranne (THF) ; on ajoute alors de l'isopropanol on de l'hexafluoroisopropanol afin de précipiter sélectivement les polymères qui dérivent exclusivement de la composition monomère.

L'invention a aussi pour objet l'utilisation de ces copolymères séquencés et greffés pour la fabrication d'objets selon la revendication 8.

Dans le cas où la composition monomère contient du chlorure de vinyle, il est nécessaire de formuler les copolymères obtenus. On peut utiliser par exemple les adjuvants et additifs habituellement rencontrés dans la formulation du PVC ou de ses copolymères, tels que stabilisant thermique, agent lubrifiant, charges...

A titre d'exemple de stabilisant thermique on peut citer les sels d'étain, de baryum/cadmium. A titre d'exemple d'agent lubrifiant, on peut citer les cires de polyéthylène.

Dans le cas où les polymères-tronc sont introduits sous forme de granulés, on ajoute les adjuvants de formulation après la polymérisation / greffage et avant le dégazage de la composition monomère, ceci afin de permettre aux adjuvants de migrer jusqu'au coeur des granulés.

Les copolymères greffés selon l'invention sont aptes à être transformés en objets moulés par les techniques habituelles d'injection ou de compression ou en tubes, films, revêtements sur câbles par extrusion, articles moulés par les techniques de calandrage, extrusion, extrusion-soufflage.

L'invention concerne également l'utilisation de ces copolymères séquencés et greffés en tant qu'agent émulgateur de polymères incompatibles entre eux mais dont l'un au moins est compatible avec les polymères-tronc et au moins un est compatible avec la composition monomère dont sont issus les greffons.

Le copolymère séquencé et greffé peut être incorporé de façon habituelle au mélange de résines thermoplastiques, à l'état fondu, dans un appareil de malaxage. La quantité de copolymère introduite peut être comprise entre 1 et 30 % et de préférence entre 2 à 15 % en poids par rapport au poids de mélange de résines thermoplastiques.

A titre d'exemples de polymères ou résines thermoplastiques compatibles avec les polymères issus d'une composition monomère contenant du chlorure de vinyle, on peut citer notamment le polychlorure de vinyle (PVC) et les copolymères ou mélanges contenant du monochlorure de vinyle (CVM).

Les exemples suivants illustrent l'invention sans toutefois la limiter.

EXEMPLE 1

Dans un réacteur de 2 l, on introduit 150 g de granulés de polyétheresteramide de granulométrie moyenne égale à environ 3 mm.

Le polyétheresteramide utilisé est obtenu par copolycondensation de séquences de polyamide-12 $\alpha,\omega$ dicarboxylées de $\overline{Mn} = 600$ et de séquences de polytétraméthylène glycol $\alpha,\omega$ dihydroxylées de $\overline{Mn} = 2$ 000.

Après un vide poussé de 5 min, on ajoute 45 g d'acrylate de butyle et 3 g d'initiateur de polymérisation.

Après 2 heures d'agitation faible du mélange réactionnel à température ambiante, on ajoute 800 g d'eau et on porte le mélange réactionnel à 56°C.

La polymérisation se déroule à 56°C pendant 6 heures. Lorsque la polymérisation est terminée, on élimine les monomères de la composition monomère qui n'ont pas réagi, c'est-à-dire qui ne se sont ni greffés, ni polymérisés.

Les copolymères obtenus sont ensuite filtrés puis séchés sous vide. On obtient 182 g de granulés de résine qui sont mis en forme d'éprouvettes par passage dans une presse à injecter.

On évalue les éprouvettes en traction-allongement conformément à la norme NF T 51 034, en dureté Shore D conformément à la norme ISO 868.

4

EXEMPLE 2

Dans un réacteur de 2 l, on introduit 150 g de granulés de polyétheresteramide de granulométrie moyenne égale à environ 3 mm et de caractéristiques identiques à celles décrites dans l'EXEMPLE 1.

Après un vide poussé de 5 min, on ajoute 45 g de méthacrylate de méthyle et 3 g d'initiateur de polymérisation.

Les conditions de polymérisation / greffage, filtration, et séchage sont identiques à celles décrites dans l'EXEMPLE 1. On obtient 186 g de granulés que l'on injecte sous forme d' éprouvettes que l'on évalue dans les mêmes conditions que dans l'EXEMPLE 1.

EXEMPLE 3

A. Dans un réacteur de 25 l, on disperse 1600 g de poudre de polyétheresteramide de granulométrie moyenne égale à 40 $\mu$m dans 13 kg d'eau contenant 18 g d'agent de stabilisation (colloïde de type alcool polyvinylique).

Le polyétheresteramide a les mêmes caractéristiques que celui utilisé dans l'EXEMPLE 1.

On réalise un vide poussé pendant 5 min avant d'introduire 5400 g de CVM et 32 g d'initiateur de polymérisation. Le réacteur est muni d'une agitation PFAUDLER, d'une contre-pale et la vitesse d'agitation est de 300 tours/mn.

Le mélange réactionnel est d'abord agité à température ambiante pendant 2 heures, puis chauffé sous pression autogène à 60°C pendant 6 heures.

On procède ensuite au dégazage du réacteur pour éliminer le ou les monomères non transformés.

Les copolymères greffés sont ensuite isolés puis formulés avec les adjuvants de formulation.

Par calandrage, on obtient des feuilles que l'on presse sous forme de plaques dans lesquelles on découpe des éprouvettes à l'aide d'un emporte-pièce pour les évaluer de la même façon que dans l'EXEMPLE 1.

Les résultats sont réunis dans le Tableau I.

B. A titre de comparaison, on mélange 350 g de poudre de polyétheresteramide de mêmes caractéristiques qu'en A dans un malaxeur à cylindres 650 g de PVC d'indice de viscosité IV = 110, 10 g de stabilisant thermique et 0,3 g d'agent lubrifiant pendant 5 min à la température de 170°C.

A la sortie du malaxeur, ou obtient des feuilles que l'on presse sous forme de plaques de dimensions 150 X 150 X 2 et 150 X 150 X 4 mm pendant 5 min à 200 °C dans lesquelles on découpe des éprouvettes à l'aide d'un emporte-pièce que l'on évalue comme sous A.

EXEMPLE 4

A. Dans un réacteur de 2 l, on disperse 150 g de poudre de polyétheresteramide dans 100 g d'eau contenant 1,7 g d'agent de stabilisation (colloïde de type alcool polyvinylique).

On réalise un vide poussé pendant 5 min avant d'ajouter 280 g de CVM, 3 g d'initiateur de polymérisation.

Après un palier de 2 heures à 25 °C sous faible agitation (50 trs/mn) on ajoute 900 g d'eau. La polymérisation se déroule à 60 °C pendant 6 heures sous agitation. On ajoute ensuite 4 g de stabilisant thermique, 0,9 g de lubrifiant et 100 g de CVM. Le mélange réactionnel est agité pendant 1 heure à 30 °C avant de dégazer le CVM non transformé.

Les copolymères obtenus sont ensuite filtrés puis séchés sous vide. On obtient 370 g de poudre.

Les conditions de mise en forme de plaques des copolymères séquencés et greffés ainsi que les conditions d'évaluation des éprouvettes sont identiques à celles de l'EXEMPLE 3.

B. On mélange 420 g de poudre de polyétheresteramide, 580 g de PVC de IV = 110, 10 g de stabilisant thermique et 0,3 g d'agent lubrifiant pendant 5 min à la température de 170 °C.

Le polyétheresteramide utilisé en A et B est de mêmes caractéristiques que celui décrit dans l'EXEMPLE 1. On évalue les éprouvettes à l'aide des mêmes tests que ceux décrits dans l'EXEMPLE 1.

Les résultats obtenus sont répertoriés dans le Tableau I.

EXEMPLE 5

A. Dans un réacteur de 25 l, on introduit 2250 g de granulés de polyétheresteramide de granulométrie moyenne égale à environ 3 mm. Après un vide poussé de 5 min, on ajoute 3150 g de CVM et 45 g d'initiateur de polymérisation.

Le polyétheresteramide a les mêmes caractéristiques que celui utilisé dans l'EXEMPLE 1.

Après 2 heures d'agitation faible du mélange réactionnel à température ambiante, on ajoute 9 kg d'eau. Le milieu réactionnel est porté à 60°C et agité pendant 6 heures. Puis on ajoute 200 g de stabilisant thermique, 13 g d'agent lubrifiant et 1 kg de CVM. Après une heure à 30°C, le mélange réactionnel est dégazé afin d'éliminer le ou les monomères non transformés. Les copolymères greffés sont ensuite isolés, puis séchés sous vide. On obtient 4 300 g de granulés qui sont mis en forme de plaques dans lesquelles on découpe des éprouvettes de la même façon que dans l'EXEMPLE 3. On évalue alors les éprouvettes à l'aide des mêmes tests que ceux décrits dans l'EXEMPLE 3.

Les résultats obtenus en A sont réunis dans le Tableau I.

B. Dans un malaxeur à cylindres, on mélange 530 g de poudre de polyétheresteramide de mêmes caractéristiques et granulométrie que dans l'EXEMPLE 3, 470 g de PVC de IV = 110, 10 g de stabilisant thermique et 0,3 g d'agent lubrifiant pendant 5 min à la température de 170 °C.

On obtient des feuilles que l'on presse sous forme de plaques pendant 5 min à 200 °C et dans lesquelles sont découpées des éprouvettes, que l'on évalue comme sous A.

Les résultats sont réunis dans le Tableau I.

EXEMPLE 6

Dans un réacteur de type post-polymériseur de 1 l, on introduit 100 g de poudre de polyétheresteramide de mêmes caractéristiques et granulométrie que celui décrit dans l'EXEMPLE 3, puis on réalise un vide poussé pendant 15 min.

On ajoute alors 600 g de CVM et 1,5 g d'initiateur de polymérisation.

On laisse gonfler le mélange pulvérulent pendant 30 min au repos et à température ambiante puis on chauffe le réacteur à 60°C pendant 7 heures afin que se déroule la polymérisation / greffage sous une agitation de 100 tours/mn.

Les copolymères greffés obtenus (430 g) sont formulés avec un stabilisant thermique (sel d'étain) et un lubrifiant (cire de polyéthylène), calandrés sous forme de feuilles que l'on presse sous forme de plaques dans lesquelles on découpe des éprouvettes que l'on teste dans les mêmes conditions que celles de l'EXEMPLE 3.

Les résultats obtenus sont répertoriés dans le Tableau I.

EXEMPLE 7

Dans un réacteur de 25 l, on introduit 2500 g de granulés de polyétheresteramide de granulométrie moyenne égale à environ 3 mm.

Le polyétheresteramide est obtenu par copolycondensation de séquences de polyamide-12 $\alpha,\omega$ dicar-boxylées de $\overline{Mn}$ = 2000 et de séquences de polytétraméthylène glycol de $\overline{Mn}$ = 2000.

Après un vide poussé de 5 min, on ajoute 2500 g de CVM et 25 g d'initiateur de polymérisation. Après 2 heures d'agitation faible du mélange réactionnel à température ambiante, on ajoute 5 kg d'eau. Le milieu réactionnel est porté à 56 °C pendant 6 heures puis refroidi à 30 °C.

On ajoute alors 1 kg de CVM, 200 g de stabilisants thermiques, 12,5 g d'agents lubrifiants.

On porte l'ensemble à 35 °C pendant 2 heures puis le CVM qui n'a pas réagi est dégazé.

Après filtration et séchage, on obtient 4300 g de granulés qui sont mis en forme de plaques dans lesquelles on découpe des éprouvettes que l'on évalue de la même façon que dans l'EXEMPLE 3.

Les résultats sont réunis dans le Tableau I.

EXEMPLE 8

Dans un réacteur de 2 l, on introduit 150 g de granulés de polyétheresteramide de granulométrie moyenne égale à environ 3 mm et de caractéristiques identiques à celles décrites dans l'EXEMPLE 1.

Après un vide poussé de 5 min on ajoute 200 g de CVM, 20 g d'acétate de vinyle et 3 g d'initiateur de polymérisation.

Après 2 heures d'agitation faible du mélange réactionnel à température ambiante, on ajoute 800 g d'eau. Le milieu réactionnel est porté à 60°C et agité pendant 6 heures. Puis on ajoute 10 g de stabilisant thermique, 1 g d'agent lubrifiant et 100 g de CVM. Après une heure à 30°C, le mélange réactionnel est dégazé afin d'éliminer les monomères non transformés. Les copolymères greffés sont ensuite isolés, puis séchés sous vide. On obtient 310 g de granulés qui sont mis en forme de plaques dans lesquelles ou découpe des éprouvettes de la même façon que dans l'EXEMPLE 3. On évalue alors les éprouvettes à l'aide des mêmes tests que ceux décrits dans l'EXEMPLE 3.

Les résultats sont réunis dans le Tableau I.

EXEMPLE 9

Dans un réacteur de 2 l, on introduit 150 g de granulés de polyétheresteramide de granulométrie moyenne égale à environ 3 mm et de caractéristiques identiques à celles décrites dans l'EXEMPLE 1.

Après un vide poussé de 5 min, on ajoute 45 g de styrène et 3 g d'initiateur de polymérisation.

Les conditions de polymérisation / greffage, filtration et séchage sont identiques à celles décrites dans l'EXEMPLE 1. On obtient 182 g de granulés que l'on injecte sous forme d'éprouvettes que l'on évalue dans les mêmes conditions que dans l'EXEMPLE 1.

Les résultats sont réunis dans le Tableau I.

EXEMPLE 10

Dans un réacteur de 2 l, on introduit 150 g de granulés de polyétheresteramide de granulométrie moyenne égale à environ 3 mm et de caractéristiques identiques à celles décrites dans l'EXEMPLE 1.

Après un vide poussé de 5 min, on ajoute 150 g de styrène et 3 g d'initiateur de polymérisation.

Les conditions de polymérisation / greffage, filtration et séchage sont identiques à celles décrites dans l'EXEMPLE 1. On obtient 300 g de granulés que l'on injecte sous forme d'éprouvettes que l'on évalue dans les mêmes conditions que dans l'EXEMPLE 1.

Les résultats sont réunis dans le Tableau I.

EXEMPLE 11

Dans un réacteur de 2 l, on introduit 150 g de granulés de polyétheresteramide de granulométrie moyenne égale à environ 3 mm et de caractéristiques identiques à celles décrites dans l'EXEMPLE 1.

Après un vide poussé de 5 mn, on ajoute 160 g d'acrylate d'éthyl 2-hexyle et 3 g d'initiateur de polymérisation.

Les conditions de polymérisation / greffage, filtration et séchage sont identiques à celles décrites dans l'EXEMPLE 1. On obtient 300 g de granulés que l'on injecte sous forme d'éprouvettes que l'on évalue dans les mêmes conditions que dans l'EXEMPLE 1.

Les résultats sont réunis dans le Tableau I.

EXEMPLE 12

Dans un réacteur de 2 l, on introduit 150 g de granulés de polyétheresteramide de granulométrie moyenne égale à environ 3 mm et de caractéristiques identiques à celles décrites dans l'EXEMPLE 1.

Après un vide poussé de 5 min, on ajoute 150 g de chlorotrifluoroéthylène et 2 g d'initiateur de polymérisation.

Les conditions de polymérisation / greffage, filtration et séchage sont identiques à celles décrites dans l'EXEMPLE 1. On obtient 255 g de granulés que l'on injecte sons forme d'éprouvettes que l'on évalue dans les mêmes conditions que dans l'EXEMPLE 1.

Les résultats sont réunis dans le Tableau I.

EXEMPLE 13

Dans un reacteur de 2 l, on introduit 150 g de granulés de polyétherester de granulométrie moyenne égale à environ 3 mm. Le polyétherester utilisé résulte de la copolymérisation de séquences de polytétra-méthylène glycol de $\overline{Mn}$ = 2000 et de séquences polyester constituées de polybutylènetéréphtalate. Sa dureté Shore D est égale à 35.

Après un vide poussé de 5 min, on ajoute 45 g d'acrylate de butyle et 3 g d'initiateur de polymérisation.

Les conditions de polymérisation / greffage, filtration et séchage sont identiques à celles décrites dans l'EXEMPLE 1. On obtient 188 g de granulés que l'on injecte sous forme d'éprouvettes que l'on évalue dans les mêmes conditions que dans l'EXEMPLE 1.

Les résultats, sont réunis dans le Tableau I.

EXEMPLE 14

Dans un réacteur de 2 l, on introduit 150 g de granulés de polyétherester de granulométrie moyenne égale à environ 3 mm et de caractéristiques identiques à celles décrites dans l'EXEMPLE 13.

Après un vide poussé de 5 min, on ajoute 45 g de méthacrylate de méthyle et 3 g d'initiateur de polymérisation.

Les conditions de polymérisation / greffage, filtration et séchage sont identiques à celles décrites dans l'EXEMPLE 1. On obtient 189 g de granulés que l'on injecte sous forme d'éprouvettes que l'on évalue dans les mêmes conditions que dans l'EXEMPLE 1.

Les résultats sont réunis dans le Tableau I.

EXEMPLE 15

Dans un réacteur de 2 l, on introduit 150 g de granulés de polyétherester de granulométrie moyenne égale à environ 3 mm et de caractéristiques identiques à celles décrites dans l'EXEMPLE 13.

Après un vide poussé de 5 min, on ajoute 200 g de CVM et 3 g d'initiateur de polymérisation.

Les conditions de polymérisation / greffage sont identiques à celles décrites dans l'EXEMPLE 8. Avant le dégazage du CVM non transformé, on ajoute 10 g de stabilisant thermique (sel d'étain) et 1 g de lubrifiant (cire de polyéthylène).

On obtient 186 g de granulés que l'on injecte sous forme d'éprouvettes que l'on évalue dans les mêmes conditions que dans l'EXEMPLE 1.

Les résultats sont réunis dans le Tableau I.

EXEMPLE 16

Dans un réacteur de 2 l, on introduit 150 g de granulés de polyétherester de granulométrie moyenne égale à environ 3 mm et de caractéristiques identiques à celles décrites dans l'EXEMPLE 13.

Après un vide poussé de 5 min, on ajoute 45 g de styrène et 3 g d'initiateur de polymérisation.

Les conditions de polymérisation / greffage, filtration et séchage sont identiques à celles décrites dans l'EXEMPLE 1.

On obtient 183 g de granulés que l'on injecte sous forme d'éprouvettes que l'on évalue dans les mêmes conditions que dans l'EXEMPLE 1.

Les résultats sont réunis dans le Tableau I.

EXEMPLE 17 (COMPARATIF)

A. On moule des plaques de deux sortes de polyétheresteramide, l'un de mêmes caractéristiques que celui utilisé dans l'EXEMPLE 1 (ECHANTILLON A1), l'autre de mêmes caractéristiques que celui utilisé dans l'EXEMPLE 7 (ECHANTILLON A2).

B. On moule des plaques de PVC plastifié par du phtalate de diisooctyle

(plastifié à 40 PCR ECHANTILLON B1)

(plastifié à 60 PCR ECHANTILLON B2)

(plastifié à 100 PCR ECHANTILLON B3)

(PCR signifie pour 100 grammes de résine).

C. On moule des plaques de polyétherester (de mêmes caractéristiques que celui décrit dans l'EXEMPLE 13).

On découpe des éprouvettes dans les plaques obtenues en A, B et C que l'on teste dans des conditions identiques à celles décrites dans l'EXEMPLE 1.

Les résultats sont réunis dans le Tableau I.

TABLEAU I

| N° EX | Tronc * base greffée | Taux de greffage en (%) | Troncs (% en poids dans le mélange) | Dureté Shore D (instantané) | Traction CR (M Pa) | AR (%) |
|---|---|---|---|---|---|---|
| 1 (S) | polyéther-esteramide * acrylate de butyle | 48 | 82 | 17 | 9 | 380 |
| 2 (S) | polyétherester amide * méthacrylique de méthyle | 78 | 80 | 24 | 15 | 580 |
| 3.A (S) | polyétherester amide * CVM | 80 | 35 | 51 | 21 | 302 |
| 3.B | polyétherester amide + PVC | mélange | 35 (non greffés) | 49 | 11 | 22 |
| 4.A (S) | polyétherester amide * CVM | 90 | 40 | 46 | 19 | 448 |
| 4.B | polyétherester amide + PVC | mélange | 40 (non greffés) | 50 | 10 | 33 |
| 5.A (S) | polyétherester amide * CVM | 85 | 53 | 34 | 16 | 509 |
| 5.B | polyétherester amide + PVC | mélange | 53 (non greffés) | 38 | 6 | 62 |
| 6 (M) | polyétherester amide * CVM | 90 | 23 | | | |
| 7 (S) | polyétherester amide * CVM | 70 | 58 | | | |

9

| N° EX | Tronc * base greffée | Taux de greffage en (%) | Troncs (% en poids dans le mélange) | Dureté Shore D (instan tané) | Traction CR (M Pa) | AR (%) |
|---|---|---|---|---|---|---|
| 8 (S) | polyétherester amide * CVM, acétate de vinyle | 85 | 48 | | | |
| 9 (S) | polyétherester amide * styrène | 19 | 82 | 20 | 17 | 740 |
| 10 (S) | polyétherester amide * styrène | 60 | 50 | 40 | 16 | 70 |
| 11 (S) | polyétherester amide * acrylate d'éthyl 2 hexyle | 50 | 50 | 24 | 2 | 260 |
| 12 (S) | polyétherester amide * chlorotrifluoro éthylène | 80 | 66 | | | |
| 13 (S) | polyétherester * acrylate de butyle | | 78 | 22 | 6 | 96 |
| 14 (S) | polyétherester * méthacrylate de butyle | | 80 | 36 | 15 | 150 |
| 15 (S) | polyétherester * CVM | | 54 | 40 | 12 | 104 |
| 16 (S) | polyétherester * styrène | | 82 | | | |
| 17.A | polyétherester amide | | | 24 | 24 | 1159 |

| N° EX | Tronc * base greffée | Taux de greffage en (%) | Troncs (% en poids dans le mélange) | Dureté Shore D (instantané) | Traction CR (M Pa) | AR (%) |
|---|---|---|---|---|---|---|
| 17.A₂ | polyétherester amide | troncs seuls | 100 | 46 | 47 | 855 |
| 17.B₁ | PVC | greffons seuls | 0 | 58 | 23 | 267 |
| 17.B₂ | PVC | greffons seuls | 0 | 43 | 16 | 290 |
| 17.B₃ | PVC | greffons seuls | 0 | 25 | 9 | 467 |
| 17.C | polyétherester | troncs seuls | 100 | 28 | 15 | 480 |

(S)   procédé de polymérisation en suspension
(M)   procédé de polymérisation en masse
(CR)  contrainte à la rupture
(AR)  allongement à la rupture


**Revendications**

1.  Copolymères séquencés et greffés dont les troncs sont constitués de motifs blocs polyesters ou blocs polyamide répartis de façon séquentielle, caractérisés (i) en ce qu'au moins une séquence du tronc est soluble dans la composition monomère dont sont issus les greffons et en ce qu'au moins une séquence dudit tronc est insoluble dans ladite composition monomère et (ii) en ce que les greffons contiennent du chlorure de vinyle, du chlorure de vinylidène, du chlorotrifluoroéthylène, du (méth)-acrylate de méthyle, d'éthyle, de butyle, d'éthyl-2-hexyle du styrène, de l'alphaméthylstyrène, de l'acétate de vinyle.

2.  Copolymères séquencés et greffés selon la revendication 1, caractérisés en ce qu'ils sont formés de 1 à 99,9 % en poids de greffons, et de préférence de 10 à 99,9 %.

3.  Copolymères séquencés et greffés selon la revendication 1 ou 2, caractérisés en ce que les troncs sont à base de polyétheresteramides.

4.  Copolymères séquencés et greffés selon l'une quelconque des revendications 1 à 3, caractérisés en ce que les troncs sont à base de polyétherester.

5.  Procédé de préparation de copolymères séquencés et greffés tels que définis dans les revendications 1 à 4, caractérisé en ce qu'on pratique le greffage radicalaire de la composition monomère ainsi que sa polymérisation radicalaire sur les troncs.

6.  Procédé de préparation selon la revendication 5, caractérisé en ce que la polymérisation / greffage a lieu en suspension.

7.  Procédé de préparation selon la revendication 5, caractérisé en ce que la polymérisation / greffage se fait en masse.

8.  Utilisation de copolymères séquencés et greffés tels que définis dans les revendications 1 à 4 pour la fabrication d'objets moulés, extrudés, films, feuilles et plaques.

**9.** Alliage comprenant les copolymères séquencés et greffés des revendications 1 à 4 et au moins deux polymères ou résines incompatibles entre eux, l'un au moins étant compatible avec les troncs des dits copolymères séquencés et greffés, l'un au moins étant compatible avec les greffons.

**10.** Alliage selon la revendication 9, caractérisé en ce qu'il contient de 1 à 30 % en poids de copolymères séquencés et greffés tels que définis dans les revendications 1 à 4 et de préférence de 2 à 15 % par rapport au poids du mélange de polymères ou de résines.

**Claims**

**1.** Grafted block copolymers whose backbones consist of sequentially distributed polyester block or polyamide block units, characterized (i) in that at least one block of the backbone is soluble in the monomer composition from which the grafts are produced and in that at least one block of the said backbone is insoluble in the said monomer composition and (ii) in that the grafts contain vinyl chloride, vinylidene chloride, chlorotrifluoroethylene, methyl, ethyl, butyl and/or 2-ethylhexyl (meth)acrylate, styrene, alpha-methylstyrene and/or vinyl acetate.

**2.** Grafted block copolymers according to Claim 1 characterized in that they are made up of 1 to 99.9 %, and preferably of 10 to 99.9 %, by weight of grafts.

**3.** Grafted block copolymers according to Claim 1 or 2, characterized in that the backbones are based on polyetheresteramides.

**4.** Grafted block copolymers according to any one of Claims 1 to 3, characterized in that the backbones are based on polyetherester.

**5.** Process for the preparation of grafted block copolymers such as defined in Claims 1 to 4, characterized in that radical grafting of the monomer composition and its radical polymerization on the backbones are performed.

**6.** Process of preparation according to Claim 5, characterized in that the polymerization/grafting takes place in suspension.

**7.** Process of preparation according to Claim 5, characterized in that the polymerization/grafting takes place in bulk.

**8.** Use of grafted block copolymers as defined in Claims 1 to 4 for the manufacture of moulded or extruded articles, films, sheets and plaques.

**9.** Alloy comprising the grafted block copolymers of claims 1 to 4 and at least two mutually incompatible polymers or resins, at least one being compatible with the backbones of the said grafted block copolymers, at least one being compatible with the grafts.

**10.** Alloy according to Claim 9, characterized in that it contains from 1 to 30 %, and preferably 2 to 15 %, by weight of grafted block copolymers such as defined in Claims 1 to 4, relative to the weight of the mixture of polymers or resins.

**Patentansprüche**

**1.** Sequenzierte und gepfropfte Copolymere deren Gerüstketten aus Einheiten von Polyesterblöcken oder Polyamidblöcken in sequentieller Verteilung bestehen, dadurch gekennzeichnet, daß (I) mindestens eine Gerüstkettensequenz in der Monomerenmischung, aus der die Aufpfropfungen gebildet werden, löslich ist, und dadurch, daß mindestens eine Sequenz der genannten Gerüstkette in der genannten Monomerenmischung unlöslich ist, und (II) dadurch daß die Aufpfropfungen Vinylchlorid, Vinylidenchlorid, Chlortrifluorethylen, Methyl-, Ethyl-, Butyl-, 2-Ethylhexyl-Methacrylat, Styrol, alpha-Methylstyrol, Vinylacetat enthalten.

**2.** Sequenzierte und gepfropfte Copolymere nach Anspruch 1, dadurch gekennzeichnet, daß sie aus 1 bis 99 Gewichtsprozenten, und bevorzugt aus 10 bis 99,9 %, Aufpfropfungen gebildet sind.

**3.** Sequenzierte und gepfropfte Copolymere nach Anspruch 1 oder 2, dadurch gekennzeichnet, daß die Aufpfropfungen auf Basis von Polyetheresteramiden sind.

**4.** Sequenzierte und gepfropfte Copolymere nach irgendeinem der Ansprüche 1 bis 3, dadurch gekennzeichnet, daß die Aufpfropfungen auf Basis von Polyetherester sind.

**5.** Verfahren zur Herstellung von sequenzierten und gepfropften Copolymeren, wie in den Ansprüchen 1 bis 4 definiert, dadurch gekennzeichnet, daß die radikalische Aufpfropfung der Monomerenmischung sowie deren radikalische Polymerisation an die Gerüstkette angewandt wird.

**6.** Herstellungsverfahren nach Anspruch 5, dadurch gekennzeichnet, daß die Polymerisation/Aufpfropfung in Suspension durchgeführt wird.

**7.** Herstellungsverfahren nach Anspruch 5, dadurch gekennzeichnet, daß die Polymerisation/Aufpfropfung in Masse durchgeführt wird.

**8.** Verwendung der sequenzierten und gepfropften Copolymere, wie in den Ansprüchen 1 bis 4 definiert, zur Herstellung von gepreßten, extrudierten Gegenständen, Filmen, Blättern und Platten.

**9.** Kunststoff-Legierung bestehend aus den sequenzierten und gepfropften Copolymeren der Ansprüche 1 bis 4 und mindestens zwei miteinander nicht mischbaren Polymeren oder Harzen, wobei Eines mindestens mit den Gerüststrukturen der genannten sequenzierten und aufgepfropften Copolymeren mischbar ist, Eines mindestens mit den Aufpfropfungen mischbar ist.

**10.** Kunststoff-Legierung nach Anspruch 9, dadurch gekennzeichnet, daß sie 1 bis 30 Gewichtsprozente und im Verhältnis zum Gewicht der Mischung von Polymeren oder Harzen bevorzugt 2 bis 15 % sequenzierte und gepfropfte Copolymere, wie in den Ansprüchen 1 bis 4 definiert, enthält.